# EUROPÄISCHE PATENTSCHRIFT

(11) **EP 2 938 489 B1**
(45) Veröffentlichungstag und Bekanntmachung des Hinweises auf die Patenterteilung: **26.01.2022**
(21) Anmeldenummer: 13805397.0
(22) Anmeldetag: 16.12.2013
(51) Int. Cl.: B32B 27/32

(54) **KUNSTSTOFFFOLIE**
PLASTIC FILM
FEUILLE DE MATIÈRE PLASTIQUE

(30) Priorität: 27.12.2012 AT 13462012
(43) Veröffentlichungstag der Anmeldung: 04.11.2015
(73) Patentinhaber: Coveris Flexibles Austria GmbH, 6336 Langkampfen (AT)
(72) Erfinder: BOLOM, Wolfgang, A-6300 Wörgl (AT); VOLLMER, Jan-Thorsten, 83355 Grabenstätt (DE); WILDINGER, Martin, 83088 Kiefersfelden (DE)
(74) Vertreter: Puchberger & Partner Patentanwälte
(86) Internationale Anmeldenummer: PCT/EP2013/076686
(87) Internationale Veröffentlichungsnummer: WO 2014/102080

(56) Entgegenhaltungen:
- EP-A2- 2 286 658
- DE-A1-102004 008 085
- GB-A- 2 359 273
- US-A1- 2011 185 683
- US-A1- 2012 021 152

## Beschreibung

Die Erfindung betrifft eine Silagefolie aus einer mehrschichtigen Kunststofffolie zur Umwicklung von Silagematerial, umfassend eine einlagige oder mehrlagige Außenschicht, eine einlagige oder mehrlagige Innenschicht, sowie eine zwischen der Außenschicht und der Innenschicht angeordnete Zwischenschicht.

Das Silieren von landwirtschaftlichem Futtermaterial wir Gras, Klee, Hafer oder dergleichen ist ein seit langem bekanntes Verfahren, bei dem eine Konservierung des Futtermittels durch Milchsäuregärung unter Luftabschluss erfolgt. Zu diesem Zweck ist es ebenfalls bekannt, das landwirtschaftliche Futtermaterial zu verdichten und in Ballenform mit einer Kunststofffolie zu ummanteln, wodurch Silageballen erzeugt werden, die vom Landwirt über längere Zeit für späteren Gebrauch gelagert werden können. Das Siliergut kann neben der Verwendung als Futtermaterial auch als Substrat für Biogasanlagen Verwendung finden.

Derartige Kunststofffolien zur Erzeugung von Silageballen müssen gasdicht sein, um das Eindringen von Umgebungsluft in die Silage, welche in Folge die Schimmelpilzbildung begünstigen würde, zu verhindern. Zu diesem Zweck werden handelsübliche Folien in der Regel elastisch ausgeführt und werden mehrmals um das Silagematerial gewickelt. Aus dem Stand der Technik bekannte Kunststofffolien sind darüber hinaus in der Regel eingefärbt, um zu verhindern, dass Licht in die inneren Schichten der Folie vordringt und die Gasdichtheit dieser Schichten im Laufe der Zeit beeinträchtigt. Üblich sind Einfärbungen in schwarz, weiß, oder grün.

Derartige Folien sind in der Regel mehrschichtig aufgebaut und verfügen insbesondere über eine Innenschicht, eine Zwischenschicht und eine Außenschicht.

Ein Problem bei herkömmlichen eingefärbten Silagefolie besteht jedoch darin, dass der Landwirt nicht von außen auf den Zustand der Silage schließen kann. Beispielsweise könnte das Futtermaterial bereits hochgradig mit Schimmelpilz versetzt sein, ohne dass dies von außen ersichtlich wäre. Darüber hinaus erfordert die Einfärbung die Beigabe eingefärbter Polyolefine, die zusätzliche Kosten verursachen. Die Entsorgung der eingefärbten Stoffe verursacht zusätzliche Schwierigkeiten.

Mehrschichtige lichtdurchlässige Kunststofffolien sind beispielsweise aus der Druckschrift US 2012/0021152 A1 bekannt, wobei zur Schirmung gegen thermische Strahlung IR-Absorber zugegeben werden.

Die Aufgabe der Erfindung besteht somit darin, diese Probleme zu lösen und eine Silagefolie zur Herstellung von Silageballen zu schaffen, die haltbar und gasdicht ist, aber dennoch dem Landwirt eine Beurteilung des darin befindlichen Futtermaterials erlaubt, sowie einfach und günstig in der Herstellung ist.

Diese Aufgabe wird erfindungsgemäß dadurch gelöst, dass die Außenschicht, die Innenschicht und die Zwischenschicht zumindest teilweise, vorzugsweise vollständig im sichtbaren Lichtspektrum lichtdurchlässig und gasdicht ausgeführt sind.

Dabei kann die Lichtdurchlässigkeit lediglich in einem bestimmten Wellenlängenbereich, vorzugsweise im Bereich des sichtbaren Spektrums, vorgesehen sein, während andere Wellenlängen, beispielsweise ultraviolettes oder infrarotes Licht, abgeblockt werden. Die einzelnen Schichten können auch unterschiedliche Lichtdurchlässigkeiten bzw. unterschiedliche Gasdichtheiten aufweisen. Die Gasdichtheit bei 6 Lagen unverstreckter Folie kann insbesondere < 1400 cm³ /(m² · 24 h) nach DIN EN 14932:2007-03, Version 14932:2006 bei Test nach Methode aus ANNEX A der Norm ISO 5105-2:2003 sein. Erfindungsgemäß kann weiters vorgesehen sein, der Folie UV-Stabilisatoren und/oder UV-Blocker zuzugeben.

Bei Tests von Silageballen hat sich gezeigt, dass durch die erfindungsgemäße transparente bzw. teilweise lichtdurchlässige Folie eine Milchsäuregärung sowie eine Lagerung des gewickelten Futtermaterials bei Zugabe entsprechender UV-Stabilisatoren und/oder UV-Blocker über einen Zeitraum von bis zu einem Jahr gewährleistet wird.

Für den Landwirt ergibt sich der Vorteil, dass er jederzeit den Zustand des Futtermaterials beurteilen kann, und die Herstellung der Silagefolie wird vereinfacht, da keine Zusätze zur Erzielung der Einfärbung benötigt werden.

Bei der Handhabung der erfindungsgemäßen Silagefolie wird üblicherweise der Ballen aus Futtermaterial zunächst mit einem Netz umwickelt, bevor er in 4 bis 6 Folienlagen mit der erfindungsgemäßen Silagefolie umwickelt wird und es dadurch zu einem luftdichten Abschluss des darin befindlichen organischen Materials (Gras, Mais, etc.), und in weiterer Folge zu einer Milchsäuregärung kommt.

Alle Schichten der Silagefolie können UV-stabilisiert und/oder mit UV-Blockern ausgeführt sein. Als UV-Blocker können vorzugsweise Benzophenone eingesetzt werden. Die Schichten der Silagefolie können einen UV Stabilisator, vorzugsweise HALS in einem Ausmaß von 3000 ppm bis 10000 ppm, vorzugsweise 5000 bis 8000 ppm umfassen. Außerdem kann durch Zugabe von UV-Blockern das Lichtspektrum, welches durchgelassen bzw. blockiert wird, angepasst werden.

Die Außenschicht der Silagefolie kann eine Zusammensetzung aus den Stoffen LLDPE C8, LLDPE C6, mLLDPE C6, LDPE, mLLDPE C8, LLDPE C4, mLLDPE C4 und/oder Copolymeren aus diesen Stoffen umfassen. Die Außenschicht kann auch mehrschichtig ausgeführt sein, in diesem Fall bezieht sich die Zusammensetzung auf die Summe der Schichten. Die Außenschicht kann auch einen UV-Blocker enthalten.

Die Innenschicht der Silagefolie kann eine Zusammensetzung aus den Stoffen LLDPE C8, LLDPE C6, mLLDPE C6, LDPE, mLLDPE C8, LLDPE C4, mLLDPE C4, Copolymere aus diesen Stoffen, Polyisobutylen, Ethylenvinylacetat, oder Ethylenbutylacrylat umfassen. Die Innenschicht kann auch mehrschichtig ausgeführt sein, in diesem Fall bezieht sich die Zusammensetzung auf die Summe der Schichten.

Die Zwischenschicht der Silagefolie kann zumindest einen der Stoffe LLDPE C8, LLDPE C6, mLLDPE C6, LDPE, mLLDPE C8, LLDPE C4, mLLDPE C4, oder Copolymere aus diesen Stoffen umfassen. Die Zwischenschicht kann auch mehrschichtig ausgeführt sein, in diesem Fall bezieht sich die Zusammensetzung auf die Summe der Schichten.

Die Dicke der Silagefolie kann zwischen 10µm und 50µm, vorzugsweise zwischen 22µm und 27µm, insbesondere 25µm betragen.

Die Dicke der Zwischenschicht kann 40% bis 70%, vorzugsweise 50% bis 60% der Gesamtdicke der Silagefolie betragen. Die Dicke der Außenschicht kann 10% bis 25%, vorzugsweise 20% der Gesamtdicke der Silagefolie betragen. Die Dicke der Innenschicht kann 10% bis 35%, vorzugsweise 15% bis 25% der Gesamtdicke der Silagefolie betragen. Sollten die Schichten mehrschichtig ausgeführt sein, beziehen sich die Angaben auf die Summe der Dicken der jeweiligen Teilschichten. Erfindungsgemäß kann weiters vorgesehen sein, dass die Folie mehr als drei, vorzugsweise fünf Schichten umfasst. Die Außenschicht kann eine erste Außenteilschicht und eine zweite Außenteilschicht; und/oder die Innenschicht eine erste Innenteilschicht und eine zweite Innenteilschicht umfassen. Dabei kann die zweite Außenteilschicht zwischen der ersten Außenteilschicht und der Zwischenschicht, und die erste Innenteilschicht zwischen der Zwischenschicht und der zweiten Innenteilschicht aufgebracht sein.

Alle Schichten können einen UV Stabilisator, vorzugsweise HALS, umfassen. Weiters können alle Schichten einen UV Blocker umfassen.

Die Silagefolie kann elastisch ausgeführt sein und eine Maximaldehnung von mindestens 300%, vorzugsweise 390%, sowie eine reversible Gebrauchsdehnung von 30% bis 150% aufweisen. Die Silagefolie kann eine Reißdehnung in Längsrichtung von über 300% und in Querrichtung von über 300% aufweisen, wobei die Reißfestigkeit über 20N/mm² in Längsrichtung und über 20N/mm² in Querrichtung beträgt. Die Erfindung betrifft weiters einen Silageballen zur Lagerung von Silagematerial, insbesondere landwirtschaftliche Produkte wie Stroh, Heu und Mais, wobei der Silageballen eine erfindungsgemäße Silagefolie umfasst, sowie die Verwendung der erfindungsgemäßen Silagefolie zur Herstellung von Silageballen.

Weitere erfindungsgemäße Merkmale ergeben sich aus den Ansprüchen, den Zeichnungen und der Beschreibung.

Im Folgenden wird die Erfindung an Hand von Ausführungsbeispielen näher erläutert.

Es zeigen
Fig. 1: ein erstes Ausführungsbeispiel einer erfindungsgemäßen Silagefolie
Fig. 2: ein zweites Ausführungsbeispiel einer erfindungsgemäßen Silagefolie
Fig. 3: eine axonometrische Darstellung eines stehenden Silageballens der mit einer erfindungsgemäßen Silagefolie umwickelt ist;
Fig. 4: einen Schnitt durch einen Silageballen der mit einer erfindungsgemäßen Silagefolie umwickelt ist.

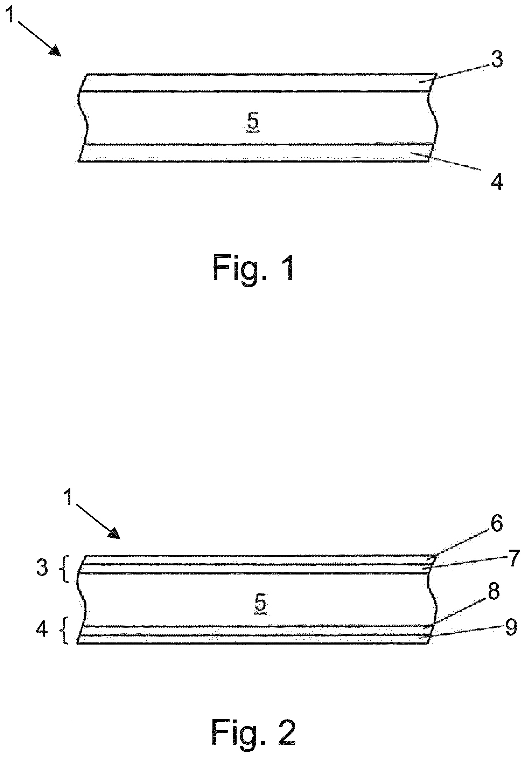

Fig. 1 zeigt ein erstes Ausführungsbeispiel einer erfindungsgemäßen Silagefolie 1.

Die Silagefolie 1 umfasst eine Außenschicht 3, eine Innenschicht 4 und eine Zwischenschicht 5. Die Außenschicht 3 besteht zu 92% aus mLLDPE und zu 8% aus HALS UV Stabilisator Masterbatch. Dabei bezeichnet der Ausdruck Masterbatch das eingesetzte Kunststoffgranulat. Die Dicke der Außenschicht 3 beträgt 20% der Gesamtdicke der mehrlagigen Silagefolie Sie ist die äußere Begrenzung der mehrlagigen Silagefolie Auf der inneren Seite grenzt an die Außenschicht 3 die Zwischenschicht 5.

Die Zwischenschicht 5 besteht aus einer Mischung (Blend) analog zu der Außenschicht sowie der Inline Randstreifenrückführung. Bei der Herstellung werden die seitlichen Rollenenden beschnitten und in den Extruder zurückgeführt, dadurch ergibt sich das Material der Randstreifenrückführung.

Die Dicke der Zwischenschicht 5 beträgt 60% der Gesamtdicke der mehrlagigen

Silagefolie Auf der Innenseite ist die Zwischenschicht 5 durch die Innenschicht 4 begrenzt. Die Innenschicht 4 besteht zu 90% aus Ethylen Vinylacetat, zu 5% aus HALS UV Stabilisator Masterbatch und zu 5% aus Polyisobutylen. Die Dicke der Innenschicht 4 beträgt 20% der Gesamtdicke der mehrlagigen Silagefolie Die Innenschicht 4 ist die innere Begrenzung der mehrlagigen Silagefolie 1 im aufgewickelten Zustand zur angrenzenden Folienlage.

Fig. 2 zeigt ein zweites Ausführungsbeispiel einer erfindungsgemäßen Silagefolie 1.

Die Außenschicht 3 umfasst die erste Außenteilschicht 6 und die zweite Außenteilschicht 7. Die erste Außenteilschicht 6 ist die äußerste Lage der Folie und besteht zu 92% aus mLLDPE und zu 8% aus HALS UV Stabilisator Masterbatch. Die Dicke der ersten Außenteilschicht 6 macht 10% der Gesamtdicke der mehrlagigen Silagefolie aus. Die zweite Außenteilschicht 7 liegt zwischen der ersten Außenteilschicht 6 und der Zwischenschicht 5. Die zweite Außenteilschicht 7 besteht zu 95% aus mLLDPE und zu 5% aus HALS UV Stabilisator.

Die Dicke der zweiten Außenteilschicht 7 beträgt 10% der Gesamtdicke der mehrlagigen Silagefolie Unter der zweiten Außenteilschicht 7 befindet sich die Zwischenschicht 5. Sie besteht aus einer analogen Mischung der zweiten Außenteilschicht sowie aus Inline Randstreifenregranulat. Das Regranulat kann die Komponenten sämtlicher Schichten umfassen. Ihr Anteil an der Gesamtdicke der mehrlagigen Silagefolie 1 beträgt 50%. Die Innenschicht 4, die aus der ersten Innenteilschicht 8 und der zweiten Innenteilschicht 9 besteht, liegt unter der Zwischenschicht 5.

Die erste Innenteilschicht 8, die zwischen der Zwischenschicht 5 und der zweiten Innenteilschicht 9 liegt besteht zu 85% aus mLLDPE, zu 10% aus LDPE und zu 5% aus HALS UV Stabilisator Masterbatch. Ihre Dicke beträgt 10% der Gesamtdicke der mehrlagigen Silagefolie 1. Die innerste Schicht der mehrlagigen Kunststofffolie bildet die zweite Innenteilschicht 9, die an die nächste Folienlage angrenzt. Sie besteht zu 92% aus LLDPE und zu 8% aus Polyisobutylen. Die Dicke der zweiten Innenteilschicht 9 beträgt 20% der Gesamtdicke der mehrlagigen Silagefolie und sie ist die einzige Schicht, die keinen HALS UV Stabilisator beinhaltet.

Die ausreichende Dichtheit der Folie kann vorzugsweise durch normierte Verfahren zur Dichtheitsprüfung festgestellt werden. So gibt etwa die DIN EN 14932:2007-03, Version 14932:2006 eine Vorgabe bezüglich der Dichtheit von < 1400 cm³ /(m² · 24 h). Derartige Vorgaben können bei einem Test nach der Methode im ANNEX A der Norm ISO 15105-2:2003 durch vorzugsweise 6 Lagen der unverstreckten Folie erreicht werden.

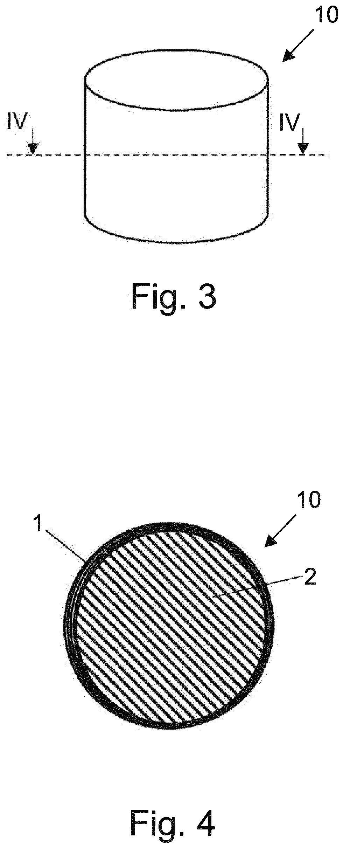

Fig. 3 zeigt eine axonometrische Darstellung eines stehenden Silageballens 10 der mit einem Ausführungsbeispiel einer erfindungsgemäßen Silagefolie 1 umwickelt ist.

Der Silageballen hat in etwa die Form eines Zylinders. Es ist die Schnittebene für Fig. 4 eingezeichnet.

Fig. 4 zeigt einen Schnitt durch einen Silageballen 10 der mit einem Ausführungsbeispiel einer erfindungsgemäßen Silagefolie 1 umwickelt ist. Das Silagematerial 2 ist ca. 4 bis 10 mal mit der mehrlagigen Silagefolie 1 umwickelt. Die Folien werden zum Gebrauch auf Rollen gewickelt. Dabei befinden sich die Außenschichten 3, 6 an der Außenseite der Rolle. Zur Umwicklung des Silageballens 10 jedoch wird die Folie derart angebracht, dass sich die Außenschichten 3, 6 an der Innenseite des Silageballens 10 befinden. Die Innenschichten 4, 9 der Folie 1 zeigt am Silageballen 10 nach außen.

### Bezugszeichenliste

- 1: Silagefolie
- 2: Silagematerial
- 3: Außenschicht
- 4: Innenschicht
- 5: Zwischenschicht
- 6: Erste Außenteilschicht
- 7: Zweite Außenteilschicht
- 8: Erste Innenteilschicht
- 9: Zweite Innenteilschicht
- 10: Silageballen

## Patentansprüche

1. Silagefolie aus einer mehrschichtigen Kunststofffolie (1) zur Umwicklung von Silagematerial (2), umfassend
- eine einlagige oder mehrlagige Außenschicht (3),
- eine einlagige oder mehrlagige Innenschicht (4),
- sowie eine zwischen der Außenschicht (3) und der Innenschicht (4) angeordnete Zwischenschicht (5),
**dadurch gekennzeichnet, dass** die Außenschicht (3), die Innenschicht (4) und die Zwischenschicht (5) vollständig im sichtbaren Spektrum lichtdurchlässig und gasdicht ausgeführt sind.

2. Silagefolie nach einem der vorhergehenden Ansprüche, **dadurch gekennzeichnet, dass** die Schichten (3, 4, 5) einen UV Stabilisator, vorzugsweise HALS in einem Ausmaß von 3000ppm bis 10000ppm, vorzugsweise 5000ppm bis 8000ppm, umfassen.

3. Silagefolie nach einem der vorhergehenden Ansprüche, **dadurch gekennzeichnet, dass** die Schichten (3, 4, 5) einen UV-Blocker im Ausmaß von bis zu 5000ppm umfassen.

4. Silagefolie nach einem der vorhergehenden Ansprüche, **dadurch gekennzeichnet, dass** die Außenschicht (3) zumindest einen der Stoffe LLDPE C8, LLDPE C6, mLLDPE C6, LDPE oder mLLDPE C8, LLDPE C4, mLLDPE C4 oder Copolymere aus diesen Stoffen umfasst.

5. Silagefolie nach einem der vorhergehenden Ansprüche, **dadurch gekennzeichnet, dass** die Innenschicht (4) zumindest einen der Stoffe LLDPE C8, LLDPE C6, mLLDPE C6, LDPE, mLLDPE C8, LLDPE C4, mLLDPE C4, Copolymere aus diesen Stoffen, Polyisobutylen, Ethylenvinylacetat oder Ethylenbutylacrylat umfasst.

6. Silagefolie nach einem der vorhergehenden Ansprüche, **dadurch gekennzeichnet, dass** die Zwischenschicht (5) zumindest einen der Stoffe LLDPE C8, LLDPE C6, mLLDPE C6, LDPE, mLLDPE C8, LLDPE C4, mLLDPE C4 oder Copolymere aus diesen Stoffen umfasst.

7. Silagefolie nach einem der vorhergehenden Ansprüche, **dadurch gekennzeichnet, dass** die Dicke der Kunststofffolie (1) zwischen 10µm und 50µm, vorzugsweise zwischen 20µm und 27µm, insbesondere 25µm beträgt.

8. Silagefolie nach einem der vorhergehenden Ansprüche, **dadurch gekennzeichnet, dass** die Dicke der Zwischenschicht (5) 40% bis 70%, vorzugsweise 50% bis 60% der Gesamtdicke der Kunststofffolie beträgt.

9. Silagefolie nach einem der vorhergehenden Ansprüche, **dadurch gekennzeichnet, dass** die Dicke der Außenschicht (3) 15% bis 25%, vorzugsweise 20%, der Gesamtdicke der Kunststofffolie beträgt.

10. Silagefolie nach einem der vorhergehenden Ansprüche, **dadurch gekennzeichnet, dass** die Dicke der Innenschicht (4) 10% bis 35%, vorzugsweise 15% bis 25% der Gesamtdicke der Kunststofffolie (1) beträgt.

11. Silagefolie nach einem der vorhergehenden Ansprüche, **dadurch gekennzeichnet, dass** die Außenschicht (3) eine erste Außenteilschicht (6) und eine zweite Außenteilschicht (7) und die Innenschicht (4) eine erste Innenteilschicht (8) und eine zweite Innenteilschicht (9) umfasst, wobei die zweite Außenteilschicht (7) zwischen der ersten Außenteilschicht (6) und der Zwischenschicht (5), und die erste Innenteilschicht (8) zwischen der Zwischenschicht (5) und der zweiten Innenteilschicht (9) liegt.

12. Silagefolie nach Anspruch 11, **dadurch gekennzeichnet, dass** die erste Innenteilschicht (8) einen UV-Stabilisator, vorzugsweise HALS, und die zweite Innenteilschicht (9) keinen UV-Stabilisator umfasst.

13. Silagefolie nach Anspruch 11 oder 12, **dadurch gekennzeichnet, dass** die erste Innenteilschicht (8) und die zweite Innenteilschicht (9) einen UV-Blocker enthalten.

14. Silagefolie (1) nach einem der vorhergehenden Ansprüche, **dadurch gekennzeichnet, dass** die Kunststofffolie (1) elastisch ausgeführt ist und eine Maximaldehnung von mindestens 200%, vorzugsweise 390%, sowie eine reversible Gebrauchsdehnung von 30% bis 150% aufweist.

15. Silagefolie (1) nach einem der vorhergehenden Ansprüche, **dadurch gekennzeichnet, dass** die Kunststofffolie (1) eine Reißdehnung in Längsrichtung von über 300% und in Querrichtung von über 300% aufweist, wobei die Reißfestigkeit über 20N/mm² in Längsrichtung und über 20N/mm² in Querrichtung beträgt.

16. Silageballen (10) zur Lagerung von Silagematerial (2), insbesondere landwirtschaftliche Produkte wie Stroh, Heu und Mais, **dadurch gekennzeichnet, dass** der Silageballen (10) eine Silagefolie (1) nach einem der vorhergehenden Ansprüche umfasst.

17. Verwendung der Silagefolie (1) nach einem der Ansprüche 1 bis 16 zur Herstellung eines Silageballens (10).

## Claims

1. A silage film made of a multi-layer plastic film (1) for wrapping silage material (2), comprising
- a single-layer or multi-layer outer layer (3),
- a single-layer or multi-layer inner layer (4),
- and an intermediate layer (5), which is arranged between the outer layer (3) and the inner layer (4),
**characterized in that** the outer layer (3), the inner layer (4) and the intermediate layer (5) are designed to be completely permeable to light in the visible spectrum and gas-tight.

2. The silage film according to one of the preceding claims, **characterized in that** the layers (3, 4, 5) comprise a UV stabilizer, preferably a HALS in an amount of 3000 ppm to 10000 ppm, preferably 5000 ppm to 8000 ppm.

3. The silage film according to one of the preceding claims, **characterized in that** the layers (3, 4, 5) comprise a UV blocker in an amount of up to 5000 ppm.

4. The silage film according to one of the preceding claims, **characterized in that** the outer layer (3) comprises at least one of LLDPE C8, LLDPE C6, mLLDPE C6, LDPE or mLLDPE C8, LLDPE C4, mLLDPE C4 or copolymers of these substances.

5. The silage film according to one of the preceding claims, **characterized in that** the inner layer (4) comprises at least one of LLDPE C8, LLDPE C6, mLLDPE C6, LDPE, mLLDPE C8, LLDPE C4, mLLDPE C4, copolymers of these substances, polyisobutylene, ethylene vinyl acetate or ethylene butyl acrylate.

6. The silage film according to one of the preceding claims, **characterized in that** the intermediate layer (5) comprises at least one of LLDPE C8, LLDPE C6, mLLDPE C6, LDPE, mLLDPE C8, LLDPE C4, mLLDPE C4 or copolymers of these substances.

7. The silage film according to one of the preceding claims, **characterized in that** the thickness of the plastic film (1) is between 10 µm and 50 µm, preferably between 20 µm and 27 µm, in particular 25 µm.

8. The silage film according to one of the preceding claims, **characterized in that** the thickness of the intermediate layer (5) is from 40 % to 70 %, preferably from 50 % to 60 %, of the total thickness of the plastic film.

9. The silage film according to one of the preceding claims, **characterized in that** the thickness of the outer layer (3) is 15 % to 25 %, preferably 20 %, of the total thickness of the plastic film.

10. The silage film according to one of the preceding claims, **characterized in that** the thickness of the inner layer (4) is 10 % to 35 %, preferably 15 % to 25 %, of the total thickness of the plastic film (1).

11. The silage film according to one of the preceding claims, **characterized in that** the outer layer (3) comprises a first outer sublayer (6) and a second outer sublayer (7) and **in that** the inner layer (4) comprises a first inner sublayer (8) and a second inner sublayer (9), the second outer sublayer (7) lying between the first outer sublayer (6) and the intermediate layer (5), and the first inner sublayer (8) lying between the intermediate layer (5) and the second inner sublayer (9).

12. The silage film according to claim 11, **characterized in that** the first inner sublayer (8) comprises a UV stabilizer, preferably a HALS, and **in that** the second inner sublayer (9) does not comprise a UV stabilizer.

13. The silage film according to claim 11 or 12, **characterized in that** the first inner sublayer (8) and the second inner sublayer (9) contain a UV blocker.

14. The silage film (1) according to one of the preceding claims, **characterized in that** the plastic film (1) is of elastic design and has a maximum elongation of at least 200 %, preferably 390 %, and a reversible elongation in use of 30 % to 150 %.

15. The silage film (1) according to one of the preceding claims, **characterized in that** the plastic film (1) has an elongation at break in the longitudinal direction of more than 300 % and in the transverse direction of more than 300 %, the tear strength being more than 20 N/mm² in the longitudinal direction and more than 20 N/mm² in the transverse direction.

16. A silage bale (10) for storing silage material (2), in particular agricultural products such as straw, hay and corn, **characterized in that** the silage bale (10) comprises a silage film (1) according to one of the preceding claims.

17. A use of the silage film (1) according to one of claims 1 to 16 for producing a silage bale (10).

## Revendications

1. Un film d'ensilage constitué d'un film plastique (1) multicouche pour envelopper du matériau d'ensilage (2), comprenant
- une couche extérieure (3) monocouche ou multicouche,
- une couche intérieure (4) monocouche ou multicouche,
- et une couche intermédiaire (5) disposée entre la couche extérieure (3) et la couche intérieure (4),
**caractérisé en ce que** la couche extérieure (3), la couche intérieure (4) et la couche intermédiaire (5) sont réalisées complètement translucides dans le spectre visible et étanches aux gaz.

2. Le film d'ensilage selon l'une des revendications précédentes, **caractérisé en ce que** les couches (3, 4, 5) comprennent un agent anti-UV, de préférence un HALS en une quantité de 3000 ppm à 10000 ppm, de préférence 5000 ppm à 8000 ppm.

3. Le film d'ensilage selon l'une des revendications précédentes, **caractérisé en ce que** les couches (3, 4, 5) comprennent un agent anti-UV en une quantité allant jusqu'à 5000 ppm.

4. Le film d'ensilage selon l'une des revendications précédentes, **caractérisé en ce que** la couche extérieure (3) comprend au moins une des substances LLDPE C8, LLDPE C6, mLLDPE C6, LDPE ou mLLDPE C8, LLDPE C4, mLLDPE C4 ou des copolymères de ces substances.

5. Le film d'ensilage selon l'une des revendications précédentes, **caractérisé en ce que** la couche intérieure (4) comprend au moins une des substances LLDPE C8, LLDPE C6, mLLDPE C6, LDPE, mLLDPE C8, LLDPE C4, mLLDPE C4, des copolymères de ces substances, du polyisobutylène, de l'éthylène-acétate de vinyle ou de l'éthylène-acrylate de butyle.

6. Le film d'ensilage selon l'une des revendications précédentes, **caractérisé en ce que** la couche intermédiaire (5) comprend au moins une des substances LLDPE C8, LLDPE C6, mLLDPE C6, LDPE, mLLDPE C8, LLDPE C4, mLLDPE C4 ou des copolymères de ces substances.

7. Le film d'ensilage selon l'une des revendications précédentes, **caractérisé en ce que** l'épaisseur du film plastique (1) est entre 10 µm et 50 µm, de préférence entre 20 µm et 27 µm, en particulier 25 µm.

8. Le film d'ensilage selon l'une des revendications précédentes, **caractérisé en ce que** l'épaisseur de la couche intermédiaire (5) est de 40 % à 70 %, de préférence de 50 % à 60 %, de l'épaisseur totale du film plastique.

9. Le film d'ensilage selon l'une des revendications précédentes, **caractérisé en ce que** l'épaisseur de la couche extérieure (3) est de 15 % à 25 %, de préférence 20 %, de l'épaisseur totale du film plastique.

10. Le film d'ensilage selon l'une des revendications précédentes, **caractérisé en ce que** l'épaisseur de la couche intérieure (4) est de 10 % à 35 %, de préférence de 15 % à 25 % de l'épaisseur totale du film plastique.

11. Le film d'ensilage selon l'une des revendications précédentes, **caractérisé en ce que** la couche extérieure (3) comprend une première sous-couche extérieure (6) et une deuxième sous-couche extérieure (7) et la couche intérieure (4) comprend une première sous-couche intérieure (8) et une deuxième sous-couche intérieure (9), la deuxième sous-couche extérieure (7) étant positionnée entre la première sous-couche extérieure (6) et la couche intermédiaire (5) et la première sous-couche intérieure (8) étant positionnée entre la couche intermédiaire (5) et la deuxième sous-couche intérieure (9).

12. Le film d'ensilage selon la revendication 11, **caractérisé en ce que** la première sous-couche intérieure (8) comprend un agent anti-UV, de préférence un HALS, et la deuxième sous-couche intérieure (9) ne comprend pas d'agent anti-UV.

13. Le film d'ensilage selon la revendication 11 ou 12, **caractérisé en ce que** la première sous-couche intérieure (8) et la deuxième sous-couche intérieure (9) comprennent un agent anti-UV.

14. Le film d'ensilage (1) selon l'une des revendications précédentes, **caractérisé en ce que** le film plastique (1) est réalisé élastique et présente un allongement maximal d'au moins 200 %, de préférence 390 %, et un allongement à l'usage réversible de 30 % à 150 %.

15. Le film d'ensilage (1) selon l'une des revendications précédentes, **caractérisé en ce que** le film plastique (1) présente un allongement à la rupture de plus de 300 % dans la direction longitudinale et de plus de 300 % dans la direction transversale, la résistance à la rupture étant supérieur à 20 N/mm² dans la direction longitudinale et supérieur à 20 N/mm² dans la direction transversale.

16. Une balle d'ensilage (10) pour le stockage d'un matériau d'ensilage (2), en particulier des produits agricoles comme du foin, de la paille et du maïs, **caractérisé en ce que** la balle d'ensilage (10) comprend un film d'ensilage (1) selon l'une des revendications précédentes.

17. Un usage du film d'ensilage (1) selon l'une des revendications 1 à 16 pour la formation d'une balle d'ensilage (10).
